# EUROPEAN PATENT SPECIFICATION

(11) **EP 1 044 783 B1**
(45) Date of publication and mention of the grant of the patent: **14.08.2002**
(21) Application number: 97925077.6
(22) Date of filing: 12.06.1997
(51) Int. Cl.: B29C 49/48, B29C 49/64

(54) **PROCESS FOR FABRICATING AN AXIALLY ORIENTED PLASTIC PIPE AND PIPE THUS OBTAINED**
VERFAHREN ZUR HERSTELLUNG EINES AXIAL ORIENTIERTEN KUNSTSTOFFROHRES UND SO HERGESTELLTES ROHR.
PROCEDE DE FABRICATION DE TUYAU EN PLASTIQUE ORIENTE AXIALEMENT ET TUYAU AINSI OBTENU

(43) Date of publication of application: 18.10.2000
(73) Proprietor: URALITA S.A., 28004 Madrid (ES)
(72) Inventor: GONZALEZ GOMEZ, Constantino, E-28906 Getafe (ES)
(74) Representative: Perez Bonal, Bernardo
(86) International application number: ES9700151
(87) International publication number: WO9856567

(56) References cited:
- DE-A- 3 717 812
- FR-A- 1 315 919
- FR-A- 2 510 940
- FR-A- 2 554 386
- US-A- 2 326 041
- US-A- 4 447 199

## Description

### OBJECT OF THE INVENTION

The invention defended herewith, consists of an AXIALLY ORIENTATED PLASTIC TUBE MANUFACTURING process AND THUS OBTAINED TUBE, of the type of plastic tube radial expansion processes parting from tubular preforms.

This invention is characterised by special tubular preform ends attachment means, as well as by a micropore evacuation system of the fluids which heat the preform and by the incorporation in the mould, of an intermediate jacket, with heating purposes and subsequent cooling of the tubing moulds.

### BACKGROUNDS OF THE INVENTION

For more than two decades past, a plastic tube manufacturing process was initiated, particularly of PVC, even when cross-linked polyethylene (EPO 0126118 of Uponor AB) was also used, improving its strength characteristics based on an axial orientation of the tube molecules which add, to the intermolecular cohesion forces of Van der Waal, others of inter-atomic attraction of the polymer molecule by a reordering of its chains, more than by doubling its circumferential tensile strength.

These characteristics make possible the substitution of conventional plastic tubes, specifically of PVC and are applicable in the industrial sector involved, specially in the scope of large drinking water conduit systems.

This technique has a previous background in a different industrial sector, for the manufacture of other plastic products such as films and containers.

To such purposes, conventional extruded preforms were provided, parting from which, they were swelled until they configured 6" diameter tubes and more recently of 12", as well as for nominal pressures which currently reached 25 bar.

Some procedures opted for the mono-orientation of PVC molecules and others for axial bi-orientation

Thus, the British priority Patent No. 22901/72, of the IMI Yorkshire Imperial Plastics Limited, entitled : "Forming method of polymeric thermoplastic material tubes" characterised, among others, by the axial orientation of a tube with end sleeve, in two half-moulds and parting from a tubular preform immersed in hot water (up to 110° C) and progressively swelled (up to 300 psi) inside the mould, by an internal fluid.

Likewise, British priority Patent No. 7932062, of IMI Yorkshire Imperial Plastics Limited, entitled :"Manufacturing procedure of a thermoplastic tube part by radial expansion of a tubular preform in circular section mould " and the "Apparatus" used in this manufacturing, of No. 7932060, describe a coupling mechanism and procedure, between the vertically displaceable mould and its horizontally displaceable ends in a simultaneous manner, centring the preform tube and leaving it hanging from an internal mandrel from each end, the same provided with a diameter below the internal one of the PVC preform, for the passage of the water which heats the same up to 90°C.

Another British priority Patent No. 7932064, also of IMI Yorkshire Imperial Plastics Limited, entitled :"Thermoplastic tube manufacturing mould for the radial expansion of a preform and additional fluid system for its performance", which completes the previous ones, substituting the support mandrels and end attachment of the tubular preforms by the water injection circuit conduit ends, into a crossed flow and at a much greater pressure than the. circuit system which circulates intermediate between the same and the swelling mould.

The French priority No. A - 2510940 of Solvay et Cie. and priority No. FR 8407182, of Draka Polva B.V., entitled : "Apparatus for the molecularly orientated material tube manufacturing", also belongs to the first group and is characterised by the inclusion of a tubular sheath into the mould, finished off at its internal end into a piston which retreats depending on the plastic tube expansion, by the effect of the oil pressure, internal to the same, both patents being differentiated by the opposed arrangement of the piston taper.

Belonging to the second group is Priority Patent No. DE 4003696, of George A. Petzetakis, entitled :"Operating procedure of bi-axially stretched plastic tube manufacturing facilities", around 20 % axial and over 30 % peripheral, by means of a stretching mandrel and continuous production, as well as with lubricated insertion, blowing the preform with nitrogen between 0,1 and 25 bar, and adding heat, between 130 to 300°C.

The applicant is unaware of the existence of thermoplastic stretching tube manufacturing process, mono-orientated, with means which adjust the tensing of the tube, by the tapered transition design in the mould, which includes in turn, an intermediate sleeve and by the adjustment means for the intermediate fluid evacuation, also providing additional attachment means of the tubular preform ends. FR 2510940 describes a method for manufacturing a plastic tube axially orientated.

### DESCRIPTION OF THE INVENTION

The invention which is the object of the present Specification refers to an axially orientated plastic tube manufacturing process as disclosed in claim 1. The tubes obtained can be used in the distribution of drinking water, though other applications are not discarded, of the type which follow a tube heating orientation process up to forming temperature, subsequent stretching and forming of the same, its consecutive cooling, its handling of the ends and subsequent packaging.

In comparison with conventional ones, these tubes permit standard thickness reductions of the same, as regards others without molecular orientation and provided with identical diameters, in proportions which reach up to 50 %, with similar material weight reductions.

To these advantages must be added that of the highest impact strength, greater hydraulic capacity of around 11 % and a fatigue strength not below 2,5 of equivalent conduits.

In order to obtain these characteristics, the preform in inserted in a mould, with a diameter which the preform has to reach after swelling, this mould being provided with an external jacket.

So as to attach the preform inside the mould, two different systems are provided, the first of these consists in the introduction of a guide with a joint stop head which, due to the elastic deformation, immobilises the preform.

Another variant of the preform ends gripping system is carried out by means of grooved metallic notches in which antagonistic clamps of a tensing triggered part are wedged.

The water extraction system consists of micropores performed on the periphery of the mould, in four orthogonal alignments and equidistant on the same.

The heating and cooling means consist of an external jacket, included between both preform gripping end systems and is provided with water input and output connections, the heating means by feeding circulating water, and that of the cooling means in open circuit.

The steps of the invention process are that of the internal filling of the mould with water and its heating whilst water is also introduced through the preform, circulating it from one end to the other.

Next, air is injected in the preform, the external water exiting to the tube through a multiplicity of mould peripheral micropores, which are distributed at regular intervals, permitting the preform radial expansion from the centre towards the ends, as well as said molecular orientation.

After the cooling of the tube exterior with circulating water between the jacket and the tubing mould, reducing the tubing internal face temperature to prevent it from collapsing, the water is removed from the interior by means of pressurised air, the residual water is extracted and, after depressurising the tube, the mould is opened and the cycle repeated, the preform ends being then cut in the exterior.

### DESCRIPTION OF THE DRAWINGS

In order to complement the description which is being carried out and with the object of facilitating a better and easier comprehension of the invention characteristics, the present Specification is enclosed, forming integral part of the same, with a set of drawings in which, with illustrative and never limitative character, the following has been represented:

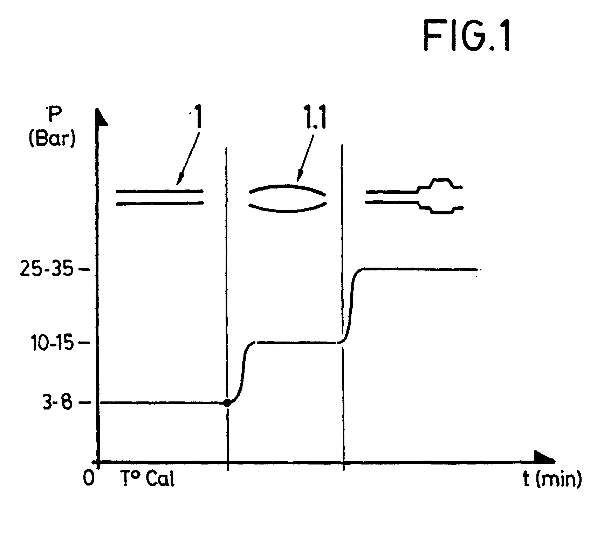

Figure 1 shows a symbolic operational diagram of this invention's manufacturing procedure representing the service temperatures and pressures of each stage, as well as the activities corresponding to each one of them.

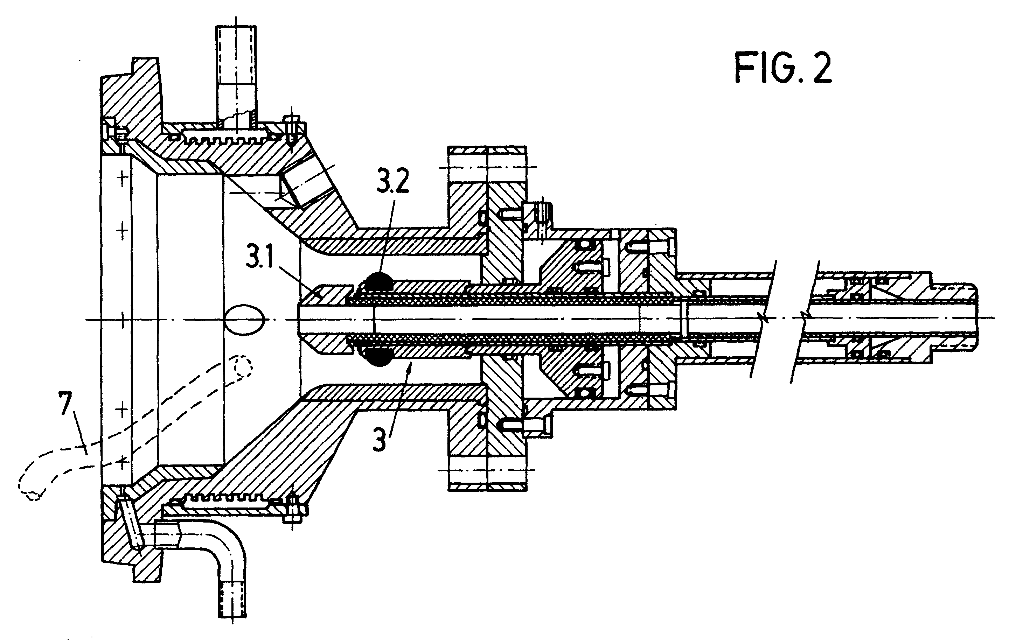

Figure 2 is an diagramatic representation of a partial cross section of the gripping system by elastic compression.

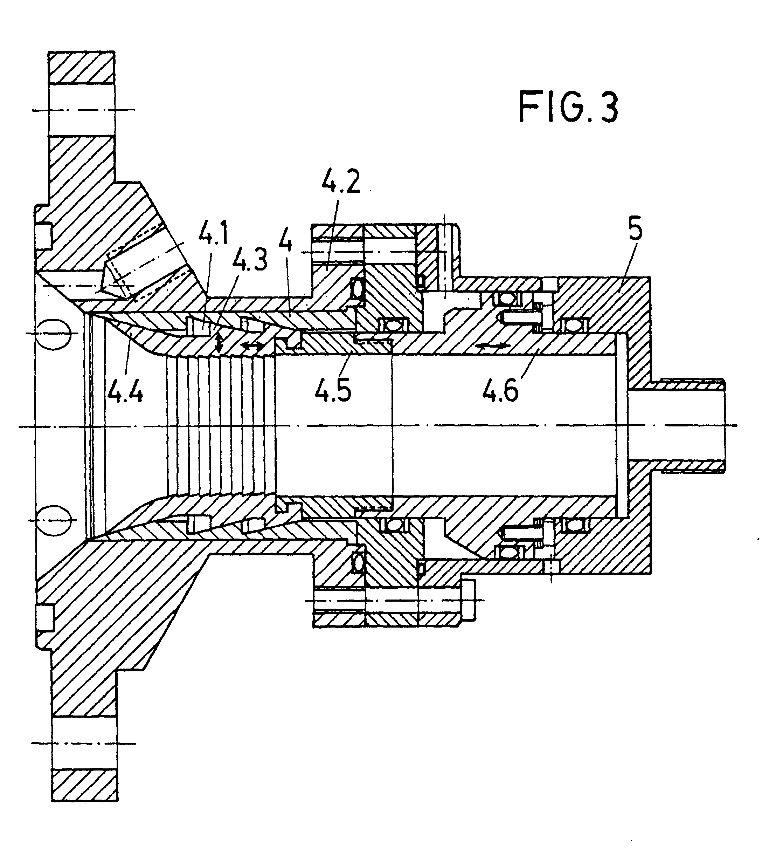

Figure 3 is a partial cross section of the gripping system by means of a metallic clamp.

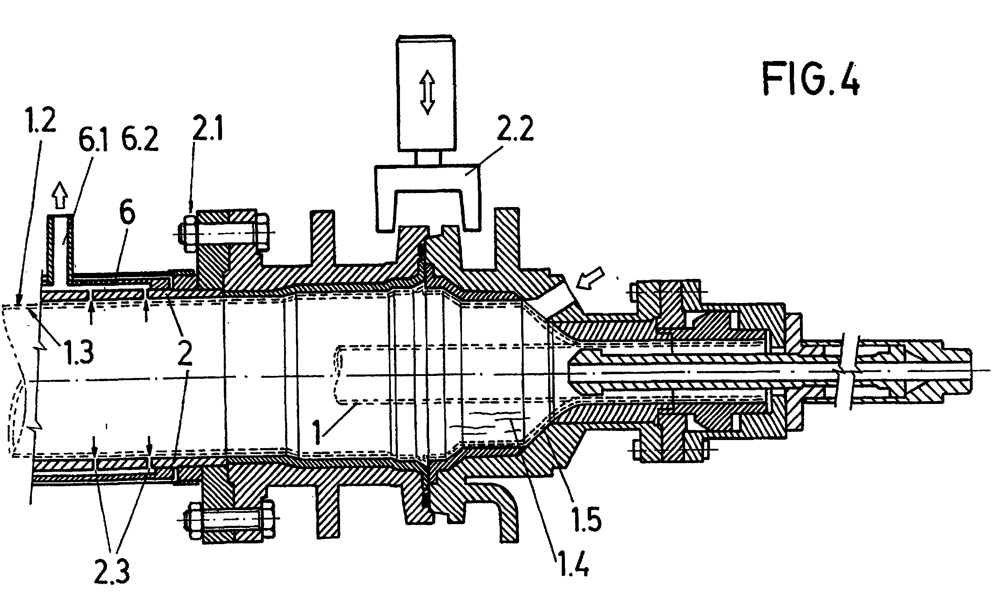

Figure 4 shows the water extraction system from the inside of the mould through the micropores, in longitudinal and transversal section, and also, the mould jacket and its cooling means, as well as the different locking systems.

### PREFERRED EMBODIMENT OF THE INVENTION

In view of what has been previously specified, the present invention refers to a plastic tubing manufacturing procedure, of the type axially orientated by heating of the tube preform to forming temperature, with subsequent stretching, consecutive cooling and end cutting, which characterises the external mould jacketed, a special configuration of the tubular preforms end attachment means, a s well as an evacuation system by micropores of the fluids which heats the preform.

The preform (1) is attached in the tube mould (2) either by the insertion of a guide preform (1) with head (3.1) and provided with an elastic O-Ring (3.2), with the internal diameter of this preform (1) of a suitable material so as to resist the predicted service conditions and with sufficient elasticity so that the pressure exerted on the same by the guide head causes its elastic deformation and with it, the immobilisation and attachment by compression of the preform (1), intending to overcome the service temperature disadvantage and the dependence of the tubing and O-Ring thickness tolerances procedures, to prevent its unequal operation.

The other variant of the preform (1) ends gripping system is carried out by means of a metallic clamp (4) provided with tapered grooves (4.1) of the attachment head (4.2), for the insertion and wedging in the same of notches (4.3) antagonistic to the triggered part (4.4) in the threaded sleeve (4.5) which joins the tensing sleeve (4.6) of the mould locking part (5).

At its ends, the mould (2) is provided with conventional locking means, which consist of flange and end covers through screws (2.1), in like manner as in the gripping system of the input mouth of the preform, whilst the gripping system of the other end consists of locking clips (2.2) of frusto-conical internal cross section.

The water removal system consists of micropores (2.3) performed on the mould (2) periphery, of approximately 1 mm in diameter, aligned and spaced from each other by 50 mm, forming a cross, as well as distributed in regular manner throughout its surface, except at the preform (1) gripping ends.

The heating and cooling means consist of an external jacket (6), included between both preform (1) gripping ends system and provided with water input (6.1) and output (6.2) connections, that of the heating connection by feeding circulating water at a temperature comprised between 95 and 100° C and that of the cooling connection which feeds at around 12° C and which returns around 50 and 14° C.

The steps for the invention process are as follows : The mould (2) is internally filled with water and heated at a temperature comprised between 90°C and 100°C, for a time which varies between six minutes and one hour, whilst through the preform (1) water is also inserted, circulating it from one end to the other for the same period of time.

Next, proceed to conventionally close this water circulation by the preform (1), and to inject air inside the same at room temperature and at a pressure comprised between 10 bar and 30 bar, causing the progressive exit of the water through the mould (2) micropores (2.3).

This permits the subsequent preform (1) radial expansion and the simultaneous orientation of the plastic polymer molecule of the same, this expansion being initiated when a pressure comprised between 10 and 15 bar is reached, in the tubular section with convex shaped generatrices and maximum radius corresponding to the central zone (1.1) of the preform (1) in expansion.

When around 25 bar is reached, the preform (1) adaptation in expansion to its final shape is initiated, carrying out all the complete process in a few seconds.

After cooling of the tube exterior with water circulating between the jacket and the mould (2) of the same, at a temperature of around 12°C for 1 to 5 minutes, the same reached in the mould (2) and in the external side (1.2) of the tube in contact with the same, with which the corresponding temperature of the internal tube side (1.3) is decreased to below 90°C, sufficient to reach an appropriate rigidity for its subsequent handling, without collapsing, subsequently removing the water from the interior by means of air at 10 bar, applied during brief seconds.

Since the recently formed tube ends are maintained with the original preform configuration, the residual water from the bottom (1.4) of the same is removed by means of a tube (7) inserted through the final end of the same.

Once the tube has been depressurised, also in brief seconds, the opening of the mould (2) is proceeded with and the cycle repeated, whilst the extracted tube is cut at its ends (1.5), from the start of both opposed tube tapered transition zones to the preform (1).

This description is not made more extensive, with the understanding that any expert in the Art shall have sufficient information to comprehend the scope of the invention and its derived advantages, as well as how to proceed to reproduce the same.

It is understood, that if the essentiality of the invention is not altered, both the variations in the materials, shape, size and arrangement of the elements are capable of variation characterised within the same.

The terms used during the description and the meaning of the same, shall always be considered in a non limitative manner.

## Claims

1. Plastic tube manufacturing process, of the type of tubes which are axially orientated comprising the following steps:
- Attaching a preform (1) in a tube mould (2),
- Filling the interior of the mould (2) with water and heating said water at a temperature comprised between 90° and 100° C for a time which varies from six minutes to one hour
- Introducing water through the preform (1) and circulating it from one end to the other for the same period of time,
- Injecting air in the preform (1), causing the external water to the tube to exit through a multiplicity of mould micropores (2.3) distributed at regular intervals and at the same time the water exits, the preform to be radially expanded from the centre towards the ends,
- Cooling the exterior (1.2) of the tube with circulating water between the jacket (6) and the tubing mould (2), thus also reducing the temperature of the internal face (1.3) of the moulding tube to prevent it from collapsing,
- Removing the water of the interior by means of pressurised air,
- Opening the mould (2),
- Cutting the moulded tube ends.

2. Plastic tube manufacturing process according to claim 1, **characterised in that**, after heating the preform (1), the water circulation through the same is then closed and air is injected inside the same at room temperature and at a pressure comprised between 10 bar and 30 bar, causing with this injection, the radial and progressive evacuation of water through the micropores (2.3) performed on the periphery of the mould (2), aligned and advantageously spaced from each other, as well as distributed in a regular manner throughout the surface, except at the gripping ends of the preform (1).

3. Plastic tube manufacturing process according to the previous claims, **characterised in that** next, the subsequent radial expansion of the preform (1) and the simultaneous orientation of its plastic polymer molecule orientation is proceeded with, initiating this expansion when a pressure comprised between 10 and 15 bar is reached, in tubular section with convex shaped generatrices and maximum radius corresponding to the central zone (1.1) of the preform (1) in expansion.

4. Plastic tube manufacturing process according to the previous claims, **characterised in that** when around 25 bar are reached, the adaptation of the preform (2) in expansion to the final shape is started, in a progressive manner from the centre towards its side ends, all the complete process being performed in a few seconds.

5. Plastic tube manufacturing process, according to the previous claims, **characterised in that** after cooling the outside of the tube with water circulating between the jacket and its mould (2), at a temperature of around 12° C for 1 to 5 minutes, reaching the same in the mould (2) and in the external face (1.2) of the tube in contact with it, due to which the temperature corresponding to the internal face (1.3) of the tube is reduced to below 90° C, sufficient to reach the appropriate rigidity for its subsequent handling, without it collapsing, then removing the water from its interior by means of air at 10 bar applied during brief seconds.

6. Plastic tube manufacturing process, according to the first claim, **characterised in that** the preform (1) is attached in the tube mould (2) by introducing a guide (3) in the preform (1) with a head (3.1) and provided with an elastic 0-Ring (3.2), with the internal diameter of this preform (1), in an appropriate material to resist the predicted service conditions and with sufficient elasticity so that the pressure exerted on it by the guide head causes its elastic deformation and with it, the immobilisation and attachment by compression of the preform (1).

7. Plastic tube manufacturing process, according to the first claim, **characterised in that** alternatively, the gripping system of the preform (1) ends is carried out by means of a metallic clamp (4) provided with tapered grooves (4.1) of the attachment head (4.2), for insertion and wedging in them of notches (4.3), antagonistic to the part (4.4), triggered in the threaded sleeve (4.5) which is joined to the tensing sleeve (4.6) of the mould (2) locking part (5).

## Patentansprüche

1. Herstellungsverfahren für axial ausgerichtete Kunststoffrohre, wobei dieses folgende Schritte umfasst:
- Festhalten einer Vorform (1) in einer Rohrform.
- Füllen des Innenbereichs der Form (2) mit Wasser und Erhitzen dieses Wassers auf eine Temperatur von 90° bis 100°C über einen Zeitraum von sechs Minuten bis eine Stunde.
- Einführung des Wassers über die Vorform (1) und Umlauf des genannten Wassers von einem Ende zum anderen über den selben Zeitraum.
- Lufteinblasen in die Vorform (1), wodurch erreicht wird, dass das Wasser ausserhalb des Rohrs über eine Vielzahl von in gleichen Abständen untereinander in der Form vorgesehene Mikroporen (2, 3) austritt und gleichzeitig das Wasser aus der Vorform austritt, um sich radial vom Zentrum zu den Enden auszubreiten.
- Kühlung der äusseren Oberfläche (1.2) des Rohrs, mit dem Wasser, das zwischen dem Mantel (6) und der Rohrform (2) umläuft, wodurch auch die Temperatur der inneren Oberfläche (1.3) der Rohrform gesenkt wird, um zu verhindern, dass sich diese verbiegt.
- Umrühren des Wassers im Inneren durch Druckluft.
- Öffnen der Form (2).
- Abschneiden der Enden des geformten Rohrs.

2. Herstellungsverfahren für Kunststoffrohre nach Anspruch 1, **dadurch gekennzeichnet dass** nach Erwärmung der Vorform (1) der Wasserumlauf über diese geschlossen wird und Luft in das Innere der Form eingeblasen wird, wobei die Luft Raumtemperatur aufweist, sowie einen Druck zwischen 10 bar und 30 bar, wobei durch dieses Einblasen erreicht wird, dass das Wasser radial und fortschreitend über die am Umfang der Form (2) fluchtend und in einem geeigneten Abstand untereinander vorgesehenen Mikroporen (2.3) abgeführt wird, wobei diese Mikroporen regelmässig über die ganze Oberfläche verteilt sind, ausser an den Enden, an denen die Vorform (1) festgehalten wird.

3. Herstellungsverfahren für Kunststoffrohre nach den vorhergehenden Ansprüchen, **gekennzeichnet durch** die nachfolgende radiale Ausdehnung der Vorform (1) unter gleichzeitiger Ausrichtung ihrer Moleküle aus polymerem Kunststoff, wobei diese Ausdehnung beginnt, wenn ein Druck von 10 bis 15 bar erreicht wird, im rohrförmigen Querschnitt mit konvexen Mantellinien und einem maximalen Radius der dem mittleren Bereich (1.1) der ausgedehnten Vorform (1) entspricht.

4. Herstellungsverfahren für Kunststoffrohre nach den vorhergehenden Ansprüchen, **dadurch gekennzeichnet, dass** bei Erreichen eines Drucks von ungefähr 25 bar damit begonnen wird, die ausgedehnte Vorform (2) an die Endform anzupassen, wobei diese Anpassung allmählich stattfindet, ausgehend vom Zentrum bis zu den seitlichen Enden und der gesamte Prozess nur wenige Sekunden dauert.

5. Herstellungsverfahren für Kunststoffrohre nach den vorhergehenden Ansprüchen, **dadurch gekennzeichnet, dass** nach Abkühlen der äusseren Oberfläche des Rohr mit Wasser, das 1 bis 5 Minuten mit einer Temperatur von ungefähr 12°C zwischen dem Mantel und der Form (2) umläuft, wobei diese Temperatur in der Form und an der äusseren Oberfläche (1,2) des anliegenden Rohrs erreicht wird, weshalb die Temperatur an der inneren Oberfläche (1.3) des Rohrs unter 90°C fällt, was ausreicht, um eine ausreichende Festigkeit für die nachfolgende Bearbeitung zu erreichen, ohne dass sich die Oberfläche dabei verbiegt, wobei das Wasser anschliessend mit Hilfe von Luft mit einem Druck von 10 bar, die über wenige Sekunden eingeblasen wird, entfernt wird.

6. Herstellungsverfahren für Kunststoffrohre nach Anspruch 1, **dadurch gekennzeichnet, dass** die Vorform (1) in der Rohrform (2) gehalten wird, indem eine Führung (3) in die Vorform (1) eingeführt wird, mit einem Kopf (3.1) und mit einem elastischen Rundschnurring (3.2) versehen, mit dem Innendurchmesser dieser Vorform (1) aus einem geeigneten Material, das den vorgesehenen Arbeitsbedingungen standhält und das eine ausreichende Elastizität aufweist, damit der von dem Kopf der Führung ausgeübte Druck eine elastische Verformung bewirkt und damit eine Festlegung und Haltung der Vorform (1) durch Zusammenpressen.

7. Herstellungsverfahren für Kunststoffrohre nach Anspruch 1, **dadurch gekennzeichnet, dass** das Festhalten der Enden der Vorform (1) abwechselnd mit Hilfe einer metallischen Schelle (4) stattfindet, die an dem beiliegenden Kopf (4.2) mit abgeschrägten Rillen (4.1) versehen ist, für die Einführung und Verkeilung der entsprechenden Kerben (4.3) des Teils (4.4), das durch die Gewindemuffe (4.5) betätigt wird, die mit der Spannmuffe (4.6) in dem Verschlussteil (5) der Form (2) verbunden ist.

## Revendications

1. Procédé de fabrication de tube en plastique du type de ceux qui sont orientés dans l'axe, comprenant les phases suivantes :
- fixation d'une préforme (1) dans un moule à tube.
- remplissage de l'intérieur du moule (2) avec de l'eau et réchauffement de l'eau en question à une température comprise entre 90° et 100° C pendant un temps variant entre six minutes et une heure.
- introduction de l'eau par la préforme (1) et circulation de l'eau en question d'une extrémité à l'autre pendant la même période temps.
- injection d'air dans la préforme (1), en faisant en sorte que l'eau extérieure au tube sorte par une multiplicité de micropores (2.3) du moule répartis à intervalles réguliers et, qu'en même temps, l'eau sorte de la préforme pour se répandre en rayon du centre vers les extrémités.
- refroidissement de l'extérieur (1.2) du tube avec l'eau circulant entre la chemise (6) et le moule à tube (2), avec réduction également de la température de la surface intérieure (1.3) du moule à tube pour éviter qu'il ne se plie.
- remuage de l'eau à l'intérieur au moyen d'air à pression.
- ouverture du moule (2)
- coupure des extrémités du tube moulé.

2. Procédé de fabrication de tube en plastique d'après la revendication 1, **caractérisé par le fait que**, après avoir chauffé la préforme, (1), la circulation d'eau par cette dernière se ferme et que l'on injecte de l'air à l'intérieur à température ambiante et à une pression comprise entre 10 bar et 30 bar, aussi cette injection provoque t'elle l'évacuation radiale et progressive de l'eau par les micropores (2.3) faits sur la périphérie du moule (2), alignés et espacés comme il faut les uns des autres et répartis régulièrement sur toute la surface, sauf aux extrémités de fixation de la préforme (1).

3. Procédé de fabrication de tube en plastique d'après les revendications précédentes, **caractérisé par** l'expansion radiale subséquente de la préforme (1) et par l'orientation simultanée de ses molécules en polymère plastique, cette expansion débutant quand on atteint une pression comprise entre 10 et 15 bar, en section tubulaire avec des génératrices de forme convexe et un rayon maximum correspondant à la zone centrale (1.1) de la préforme (1) en expansion.

4. Procédé de fabrication de tube en plastique d'après les revendications précédentes, **caractérisé par le fait que**, lorsqu'on atteint une pression d'environ 25 bar, commence l'adaptation de la préforme (2) en expansion à la forme finale, de façon progressive du centre vers ses extrémités latérales, le processus complet se faisant en quelques secondes.

5. Procédé de fabrication de tube en plastique d'après les revendications précédentes, **caractérisé par le fait que**, après refroidissement de l'extérieur du tube avec de l'eau circulant entre la chemise et le moule (2) à une température d'environ 12° C pendant 1 à 5 minutes, l'on obtient la même température dans le moule et à la surface externe (1, 2) du tube en contact avec ce dernier ; c'est pourquoi, la température correspondant à la surface interne (1.3) du tube descend en dessous de 90° C, suffisamment pour atteindre la rigidité adéquate pour sa manipulation ultérieure, sans qu'il ne se plie ; l'on retire ensuite l'eau de son intérieur au moyen d'air à une pression de 10 bar appliqué pendant quelques secondes.

6. Procédé de fabrication de tube en plastique d'après la première revendication, **caractérisé par le fait que** la préforme (1) est fixée au moule à tube (2) en introduisant un guide (3) dans la préforme (1) avec une tête (3.1) et munie d'un anneau toroïdal élastique (3.2), ce guide (1) ayant un diamètre interne d'un matériau adéquat pour résister aux conditions de travail prévues et suffisamment d'élasticité pour que la pression exercée sur le matériau par la tête du guide produise sa déformation élastique et par là, l'immobilisation et la fixation par compression de la préforme (1).

7. Procédé de fabrication de tube en plastique d'après la première revendication, **caractérisé par le fait que**, en alternative, la fixation des extrémités de la préforme (1) se fait au moyen d'un collier de serrage métallique (4) muni de rainures biseautés (4.1) à la tête jointe (4.2), pour l'insertion et le marquage des encoches (4.3) antagoniques de la partie (4.4), actionnée par le manchon fileté (4.5) relié au manchon de tension (4.6) à la partie de fermeture (5) du moule (2).
